# EUROPEAN PATENT APPLICATION

(11) **EP 4 361 926 A1**
(43) Date of publication of application: **01.05.2024**
(21) Application number: 23204065.9
(22) Date of filing: 17.10.2023
(51) Int. Cl.: G06Q 10/20, G06Q 10/0631, G05B 19/418

(54) **A METHOD FOR PLANNING CLEANING OPERATIONS AT A FACILITY**

(30) Priority: 28.10.2022 US 202217975814
(71) Applicant: Carnegie Robotics, LLC, Pittsburgh, Pennsylvania 15201 (US)
(72) Inventor: THYBO, Claus, 8230 Åbyhøj (DK); LAROSE, David, Pittsburg, PA 15201 (US); MONDI, Patrick, Pittsburgh, PA 15201 (US)
(74) Representative: Inspicos P/S

(57) **Abstract**

A method for planning cleaning operations for an autonomous cleaning vehicle (1) at a facility (9), the facility (9) comprising one or more flexible resources (13), is disclosed. A facility resource scheduling system and a cleaning scheduling system are provided. The facility resource scheduling system defines constraints for operation of the flexible resources (13) of the facility (9), and schedules operation of the flexible resources (13) subject to the defined constraints. The cleaning scheduling system defines constraints for operation of the autonomous cleaning vehicle (1), and schedules operation of the autonomous cleaning vehicle (1) subject to the defined constraints. The facility resource scheduling system and the cleaning scheduling system cooperate in scheduling operation of the flexible resources (13) and operation of the autonomous cleaning vehicle (1), at the facility (9), subject to the constraints for operation of the flexible resources (13) and to the constraints for operation of the autonomous cleaning vehicle (1), while co-optimizing operation of the flexible resources (13) and operation of the autonomous cleaning vehicle (1).

## Description

### FIELD OF THE INVENTION

The present invention relates to a method for planning cleaning operations for an autonomous cleaning vehicle at a facility, where flexible resources also operate. The method according to the invention ensures optimal operation of the flexible resources as well as of the autonomous cleaning vehicle.

### BACKGROUND OF THE INVENTION

At some facilities, flexible resources need to operate in order to handle the primary function of the facility. For instance, in the case that the facility is a storage facility, personnel and/or vehicles, such as forklifts or pallet jacks, need to move within the facility in order to pick up and drop off items at specified positions in the storage facility, e.g. at storage racks within the storage facility. It may be relevant to optimize how the flexible resources move within the facility, relative each other and/or relative to various positions or areas within the facility premises. This could, e.g., prevent collisions between the flexible resources, reduce waiting time for access for a given flexible resource to a given area or position, reduce waiting time for a third party to access a given area or position, maximise availability of a given flexible resource for an anticipated future task, optimise the timing of a given task for maximum benefit or minimum cost, give priority to specified flexible resources, and/or minimise the paths travelled by the flexible resources. To this end, facility resource scheduling systems exist which can be applied for scheduling operation of the flexible resources in an optimized manner.

Cleaning is normally required within facilities of the kind described above. Similarly to the operation of the facility resources described above, it may be advantageous to plan cleaning operations in an optimal manner, e.g. in terms of path travelled by cleaning vehicles, coverage of the premises, timing of cleaning operations to match anticipated needs, etc. Cleaning scheduling systems exist which can be applied for planning the operation of cleaning vehicles within a facility in an optimized manner.

When flexible resources as well as one or more cleaning vehicles need to operate within the same facility, it is necessary to ensure that there is no conflict between operation of the flexible resources and operation of the cleaning vehicle(s). In order to ensure this, the facility resource scheduling system may be given permanent priority over the cleaning scheduling system, thereby ensuring that the primary purpose of the facility can always be performed in an appropriate manner. In this case cleaning vehicles will not be allowed to enter certain areas or zones within the facility at times where it is necessary that the flexible resources operate within these areas. Thereby conflicts between flexible resources and cleaning vehicle(s) are efficiently avoided. However, this may have the consequence that the cleaning vehicle(s) is/are unable to perform required cleaning operations within the facility to an extent which fulfils certain obligations, e.g. in terms of coverage, frequency, etc.

### DESCRIPTION OF THE INVENTION

It is an object of embodiments of the invention to provide a method for planning cleaning operations for an autonomous cleaning vehicle at a facility, in such a manner that operation of flexible resources of the facility as well as cleaning operations are performed in an optimized manner.

The invention provides a method for planning cleaning operations for an autonomous cleaning vehicle at a facility, the facility comprising one or more flexible resources, the method comprising the steps of:
- providing a facility resource scheduling system, the facility resource scheduling system defining constraints for operation of the flexible resources of the facility, and the facility resource scheduling system being configured to schedule operation of the flexible resources subject to the defined constraints,
- providing a cleaning scheduling system, the cleaning scheduling system defining constraints for operation of the autonomous cleaning vehicle, and the cleaning scheduling system being configured to schedule operation of the autonomous cleaning vehicle subject to the defined constraints, and
- the facility resource scheduling system and the cleaning scheduling system cooperating in scheduling operation of the flexible resources and operation of the autonomous cleaning vehicle, at the facility, subject to the constraints for operation of the flexible resources and to the constraints for operation of the autonomous cleaning vehicle, while co-optimizing operation of the flexible resources and operation of the autonomous cleaning vehicle.

Thus, the invention provides a method for planning cleaning operations for an autonomous cleaning vehicle at a facility. In the present context the term 'facility' should be interpreted to mean a location or a site where regular cleaning is required. The facility could, e.g., be in the form of a storage facility, such as a warehouse, a shop, an office, an educational institution, a production facility, etc.

In the present context the term 'autonomous cleaning vehicle' should be interpreted to mean a vehicle which is capable of performing required cleaning operations, such as sweeping, washing, disinfecting, etc., and which is able to move and operate in an autonomous manner, i.e. without an operator manually operating or driving the vehicle, or being present at or near the vehicle during operation.

The cleaning vehicle may form part of a fleet of two or more cleaning vehicles, operating within the same facility. In this case, the cleaning scheduling system may plan the operation of all of the cleaning vehicles forming part of the fleet. Furthermore, it is not ruled out that one or more of the vehicles forming part of the fleet is manually operated, and that the tasks of these manually operated cleaning vehicles is also scheduled by the cleaning scheduling system. Finally, it is not ruled out that some cleaning tasks need to be performed by personnel without the use of a cleaning vehicle. Such tasks may include wiping surfaces, cleaning toilets, etc. In this case, such tasks may also be scheduled by the cleaning scheduling system.

The facility comprises one or more flexible resources. In the present context the term 'flexible resources' should be interpreted to mean entities or units which are able to perform certain operations which are required in order to appropriately operate or run the facility, and which are not fixedly arranged at a specified position within the facility. Accordingly, the flexible resources can move within the facility, either autonomously or by being operated manually. The flexible resources could, e.g., be in the form of forklifts or pallet jacks, which need to move between specified positions within the facility, e.g. in order to position and/or collect items, e.g. in/from storage racks. In the case that the facility is an office, an educational institution, or another kind of facility involving human activities, the flexible resources may include allocation of conference rooms, hallways, elevators, etc., for use by building occupants through meetings, foot traffic, etc.

In the method according to the invention, a facility resource scheduling system is provided. The facility resource scheduling system defines constraints for operation of the flexible resources of the facility. Such constraints could, e.g., include rules regarding where the flexible resources are allowed to move, and at which times, allowed paths within the facility, allowable speed and/or acceleration of the flexible resources at specified positions within the facility, urgency and/or importance of operations or tasks to be performed by the flexible resources, and/or any other suitable kind of constraint which may govern the operation of the flexible resources. Constraints could further include hours of operation of various building facilities, conference rooms, entryways, etc., or allocations of these resources for various activities, meetings, etc. Further constraints could be externally imposed, such maintenance schedules that depend on third-party organizations, anticipated traffic flows due to weather events, the impact of maintenance operations and weather-related traffic flows, etc.

The facility resource scheduling system is further configured to schedule operation of the flexible resources subject to the defined constraints. Accordingly, the facility resource scheduling system may be applied for scheduling how tasks which are to be carried out by the flexible resources are to be performed, in order to optimize the operation of the facility, while taking into account the defined constraints, i.e. while ensuring that the defined constraints are not violated.

Furthermore, a cleaning scheduling system is provided. The cleaning scheduling system defines constraints for operation of the autonomous cleaning vehicle. Similarly to the constraints of the facility resource scheduling system described above, the constraints of the cleaning scheduling system may include rules regarding where the cleaning vehicle is allowed to move, times of the day where cleaning is allowed, required or prohibited within specified zones, allowed paths which the cleaning vehicle may follow, allowable speed and/or acceleration, allowable, required or prohibited cleaning tasks within certain zones and/or time slots, and/or any other suitable kind of constraint which may govern the operation of the autonomous cleaning vehicle.

The cleaning scheduling system is further configured to schedule operation of the autonomous cleaning vehicle subject to the defined constraints. Accordingly, the cleaning scheduling system may be applied for scheduling how and when the autonomous cleaning vehicle should perform cleaning tasks within the facility.

The cleaning scheduling system may be capable of rescheduling cleaning tasks, e.g. in the case of unforeseen events. This could, e.g., be relevant in the case that a cleaning vehicle breaks down, unexpected obstacles, human intervention, etc.

Thus, the facility resource scheduling systems handles the operation of the flexible resources of the facility, whereas the cleaning scheduling system handles operation of the autonomous cleaning vehicle.

The method according to the invention further comprises the step of the facility resource scheduling system and the cleaning scheduling system cooperating in scheduling operation of the flexible resources and operation of the autonomous cleaning vehicle, at the facility. This is done subject to the constraints for operation of the flexible resources as well as to the constraints for operation of the autonomous cleaning vehicle, and while co-optimizing operation of the flexible resources and operation of the autonomous cleaning vehicle.

Thus, instead of scheduling operation of the flexible resources and the autonomous cleaning vehicle, respectively, independently of each other by means of the respective scheduling systems, and/or by granting one of the scheduling systems permanent priority over the other scheduling system, both scheduling systems are operated with due consideration to each other, while taking the respective constraints into account. Thereby it can be ensured that operation of the flexible resources as well as operation of the autonomous cleaning vehicle is scheduled in an optimized manner. For instance, it can be ensured that cleaning at the facility is performed with sufficient coverage and/or with sufficient frequency, without unduly compromising or affecting the primary operation of the facility, which is performed by means of the flexible resources. However, it is not ruled out that one of the systems is granted priority over the other during certain time slots or for certain tasks. For instance, in the case that the facility includes conference rooms or other 'spatial' resources which can be booked, the facility resource scheduling system may provide an overview or calendar showing which rooms are occupied or vacant at certain time slots, and the cleaning scheduling system may apply this in order to avoid rooms while they are occupied. However, in this case the cleaning scheduling system should also be allowed to 'book' a room for cleaning if this is required in order to ensure that all rooms are cleaned with a required frequency. When a room has been booked for cleaning in this manner, it will not be possible to book the room for other purposes.

The step of the facility resource scheduling system and the cleaning scheduling system cooperating in scheduling operation of the flexible resources and operation of the autonomous cleaning vehicle may comprise the step of the facility resource scheduling system defining constraints for the cleaning scheduling system and/or the cleaning scheduling system defining constraints for the facility resource scheduling system.

According to this embodiment, the respective scheduling systems are allowed to define constraints for each other. The constraints defined in this manner must then be taken into account, on an equal footing with other defined constraints, when operation of the flexible resources or the autonomous cleaning vehicle is scheduled. This is an easy manner of ensuring that the flexible resources are not operated in a manner which is detrimental to the operation of the autonomous cleaning vehicle, or vice versa.

For instance, a given task to be performed by the flexible resources may be time sensitive, and may therefore be given high priority. In this case the facility resource scheduling system may define a constraint for the cleaning scheduling system which specifies that the autonomous cleaning vehicle is not allowed to move in a manner that interferes with the scheduled path of the flexible resource which is assigned to this task. Similarly, constraints related to access to conference rooms, as described above, may be defined.

As another example, there may be cleaning tasks which should not be postponed beyond a certain point in time, e.g. for hygienic reasons and/or in order to ensure that all parts of the facility are cleaned regularly. In this case the cleaning scheduling system may define a constraint for the facility resource scheduling system which specifies that the autonomous cleaning vehicle must be granted access to one or more relevant zones or areas within the facility within the specified time period. As another example, cleaning operations may be scheduled with high priority at or near entrance doors in the case that an increased visitor flow is anticipated on rainy, snowy and/or salty days.

The step of the resource scheduling system and the cleaning scheduling system cooperating in scheduling operation of the flexible resources and operation of the autonomous cleaning vehicle may comprise the steps of ranking the constraints for operation of the flexible resources and/or the constraints for operation of the autonomous cleaning vehicle, and scheduling operation of the flexible resources and operation of the autonomous cleaning vehicle in accordance with the ranking.

According to this embodiment, the constraints of at least one of the scheduling systems are provided with a ranking. Subsequently, when the operation of the flexible resources and the operation of the autonomous cleaning vehicle are scheduled, the ranking of the constraints are taken into account, in the sense that constraints with high ranking are given priority over constraints with lower ranking, by both scheduling systems. Thereby it is ensured that constraints with high ranking are respected by the operation of the flexible resources as well as by the operation of the autonomous cleaning vehicle, regardless of whether the constraints relate to the resource scheduling system or to the cleaning scheduling system. Assigning a ranking to the constraints is an easy and simple manner of ensuring this.

The step of ranking the constraints for operation of the flexible resources and/or the constraints for operation of the autonomous cleaning vehicle may comprise applying a cost weight to the constraints and ranking the constraints based on the applied cost weights.

According to this embodiment, the ranking of constraints related to the facility resource scheduling system and the ranking of constraints related to the cleaning scheduling system can easily be compared, due to the applied cost weights. Thereby a total ranking of all constraints, across the facility resource scheduling system and the cleaning scheduling system, may be obtained, thereby allowing the co-optimized scheduling of operation of the flexible resources and the autonomous cleaning vehicle to be performed in an easy and simple manner.

The cost weights could, e.g., reflect the consequences of not complying with a constraint. For instance, if a constraint specifies a delivery time for an item to be picked up in a storage rack, a late delivery may result in heavy penalties in the case that the delivery is time sensitive, but the consequences may be less severe if the delivery is not time sensitive. In this case the time sensitive delivery may be provided with a high cost weight, whereas the non-time sensitive delivery may be provided with a lower cost weight. Similarly, cleaning tasks which should not be delayed, e.g. due to particularly strict hygiene requirements and/or because it has been a while since a given area or zone was cleaned, may be provided with a high cost weight, whereas cleaning tasks which may be slightly postponed without severe consequences may be provided with a lower cost weight.

The cost weights could, e.g., be interdependent, so that the cost weight associated with one constraint may depend on the satisfaction of another constraint. For instance, if a constraint specifies a delivery time for an item to be picked up in a storage rack, a late delivery may result in light penalties in the case that a similar delivery is completed on time, and may result in heavy penalties in the case that no similar delivery is completed on time. For another instance, in the case of a cleaning operation, the cost weight associated with failure to clean a particular conference room in the available time window may be higher if the room is successfully scheduled for use by building occupants, and lower if the room is not scheduled for use by building occupants.

At least one of the constraints for operation of the flexible resources and/or the constraints for operation of the autonomous cleaning vehicle may be a hard constraint, and the step of the resource scheduling system and the cleaning scheduling system cooperating in scheduling operation of the flexible resources and operation of the autonomous cleaning vehicle may comprise meeting the hard constraint(s) without modification.

In the present context the term 'hard constraint' should be interpreted to mean a constraint which must be met, regardless of the costs. Examples of hard constraints include, but are not limited to, time critical deliveries, restrictions on the movement of the flexible resources and/or the autonomous cleaning vehicle, e.g. in order to prevent collisions with walls and/or items, restrictions on speed and/or acceleration of the flexible resources and/or the autonomous cleaning vehicle, rules governing access to certain areas or zones within the facility, etc. Thus, according to this embodiment, it is efficiently ensured that such hard constraints are met.

Similarly, at least one of the constraints for operation of the flexible resources and/or the constraints for operation of the autonomous cleaning vehicle may be a soft constraint. In the present context the term 'soft constraint' should be interpreted to mean a constraint which may be slightly overruled without severe consequences. Thus, when performing the coordinated scheduling of the operation of the flexible resources and the operation of the autonomous cleaning vehicle, one or more soft constraints may be overruled, e.g. in order to ensure that one or more hard constraints are met. This could, e.g., include delivering an item with a slight delay or slightly postposing a cleaning task.

The step of the facility resource scheduling system and the cleaning scheduling system cooperating in scheduling operation of the flexible resources and operation of the autonomous cleaning vehicle may include a negotiation between the facility resource scheduling system and the cleaning scheduling system.

According to this embodiment, the facility resource scheduling system and the cleaning scheduling system ensure that they mutually take each other's constraints duly into account by performing a negotiation. During the negotiation, the scheduling systems may agree on how to interleave their respective constraints in such a manner that it is ensured that high ranking constraints are met by both scheduling systems.

The flexible resources may include one or more autonomous facility vehicles. The autonomous facility vehicles may, e.g., be autonomous forklifts or pallet jacks.

The constraints for operation of the flexible resources and/or the constraints for operation of the autonomous cleaning vehicle may be dynamically updated.

The consequences involved in not meeting a constraint may change over time. For instance, cleaning of a specific zone within the facility may initially be non-critical, in the sense that this task may be postponed without severe consequences. However, as the time since the zone was last cleaned increases, cleaning of the zone becomes more urgent, and when a hard time limit, e.g. specified by a service contract, is approaching, cleaning of the zone may become critical. In this case a constraint which specifies that the autonomous cleaning vehicle must be granted access to the specified zone may change from low priority or ranking to high priority or ranking. This may, e.g., occur gradually.

Furthermore, new tasks for the flexible resources and/or for the autonomous cleaning vehicle may be added, and if these have high priority, they may push less critical tasks which were already scheduled down the line.

The method may further comprise the step of operating the flexible resources and the autonomous cleaning vehicle in accordance with the scheduled operation. According to this embodiment, the operations which were scheduled by the respective scheduling systems are actually performed by the flexible resources and by the autonomous cleaning vehicle. Thereby optimized operation of the flexible resources as well as of the autonomous cleaning vehicle is actually obtained.

### BRIEF DESCRIPTION OF THE DRAWINGS

The invention will now be described in further detail with reference to the accompanying drawings in which
Figs. 1 and 2 illustrate an autonomous cleaning vehicle for use in a method according to an embodiment of the invention,
Fig. 3 illustrates a facility in which a method according to a first embodiment of the invention is performed,
Fig. 4 illustrates a facility in which a method according to a second embodiment of the invention is performed,
Fig. 5 is a flow chart illustrating a method according to an embodiment of the invention, and
Fig. 6 illustrates prioritization of constraints as part of a method according to an embodiment of the invention.

### DETAILED DESCRIPTION OF THE DRAWINGS

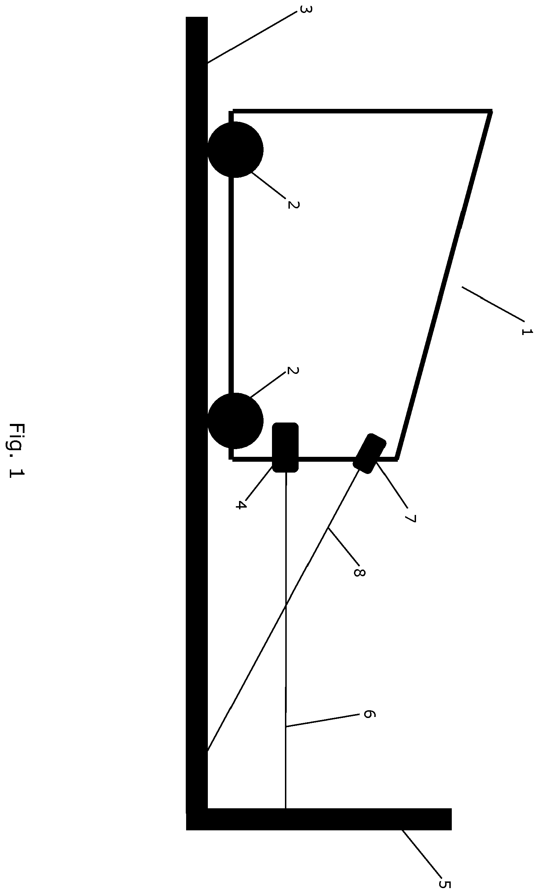

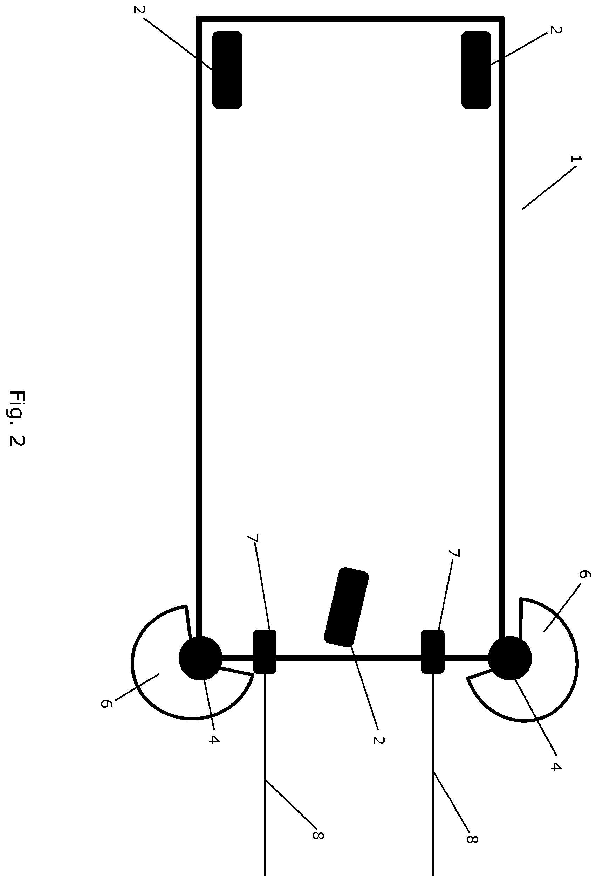

Figs. 1 and 2 are schematic views of an autonomous cleaning vehicle 1 for use in a method according to an embodiment of the invention. Fig. 1 is a side view of the autonomous cleaning vehicle 1 and Fig. 2 is a top view of the autonomous cleaning vehicle 1. The autonomous cleaning vehicle 1 may, e.g., be adapted for performing cleaning actions within a specified area at a facility, e.g. for sweeping and/or washing a floor within the specified area.

The autonomous cleaning vehicle 1 comprises wheels 2, and it is therefore adapted for driving along a surface 3, e.g. in the form of a floor. The autonomous cleaning vehicle 1 is further provided with a number of sensors for collecting sensor readings being relevant with respect to the operation of the autonomous cleaning vehicle 1. For instance, the autonomous cleaning vehicle 1 comprises two lidars 4 for detecting a position of the autonomous cleaning vehicle 1 within the specified area, in particular relative to walls 5 and/or objects within the area. The lidars 4 detect the presence and proximity of obstacles in front of the autonomous cleaning vehicle 1 and sideways relative to the autonomous cleaning vehicle 1, as indicated by detection directions 6.

Furthermore, the autonomous cleaning vehicle 1 comprises two drop-off sensors 7 for detecting obstacles in the form of slopes or vertical pits. The drop-off sensors 7 are arranged to detect such obstacles in front of and below the autonomous cleaning vehicle 1, as indicated by detection directions 8.

Furthermore, the autonomous cleaning vehicle 1 may comprise one or more further sensors which are not shown in Figs. 1 and 2. For instance, the autonomous cleaning vehicle 1 may comprise one or more odometry sensors for detecting the movements of the wheels 2, thereby tracking movements of the autonomous cleaning vehicle 1. Alternatively or additionally, the autonomous cleaning vehicle 1 may comprise one or more inertial measurement units (IMU) for detecting 3D accelerations of the autonomous cleaning vehicle 1, thereby providing information regarding the movements of the autonomous cleaning vehicle 1. Alternatively or additionally, the autonomous cleaning vehicle 1 may comprise a GPS unit for detecting the global position of the autonomous cleaning vehicle 1.

The cleaning operations which are to be performed by the autonomous cleaning vehicle 1 within the facility are planned and scheduled by means of a cleaning scheduling system. The cleaning scheduling system may form part of the autonomous cleaning vehicle 1, or it may be a separate, e.g. centrally located, system which communicates with the autonomous cleaning vehicle 1 in order to cause the autonomous cleaning vehicle 1 to perform scheduled cleaning tasks. In the case that the cleaning scheduling system is separate from the autonomous cleaning vehicle 1, the autonomous cleaning vehicle 1 may comprise a communication unit (not shown) allowing the autonomous cleaning vehicle 1 to communicate with the cleaning scheduling system. This will allow the cleaning scheduling system to provide commands for the autonomous cleaning vehicle 1. However, the communication unit may also allow the autonomous cleaning vehicle 1 to communicate information to the cleaning scheduling system which may be relevant with regard to the planning and scheduling of the cleaning operations. For instance, the autonomous cleaning vehicle 1 may report the presence of obstacles, particularly dirty areas, etc.

The cleaning scheduling system schedules the operation of the autonomous cleaning vehicle 1 in such a manner that service contracts with the facility are fulfilled, e.g. in terms of efficiency, coverage, types of cleaning operations, frequency of the performed cleaning operations, etc. Furthermore, the cleaning scheduling system may specify constraints with regard to the navigation of the autonomous cleaning vehicle 1, e.g. in order to avoid collisions between the autonomous cleaning vehicle 1 and walls or items within the facility, and/or in order to ensure that the autonomous cleaning vehicle 1 moves at an appropriate speed and at an appropriate acceleration at all times.

Since the autonomous cleaning vehicle 1 operates within a facility, it is also necessary to take the primary operation of the facility into account when scheduling cleaning operations of the autonomous cleaning vehicle 1. To this end the cleaning scheduling system cooperates with a facility resource scheduling system which schedules the operation of one or more flexible resources of the facility. The flexible resources may, e.g., be in the form of forklifts or pallet jacks which need to move within the facility, and thereby within the same specified area as the autonomous cleaning vehicle 1. The cooperation between the cleaning scheduling system and the facility resource scheduling system results in optimal operation of the autonomous cleaning vehicle 1 as well as of the flexible resources of the facility. Thereby it is ensured that service contracts and obligations are met in terms of cleaning of the premises as well as in terms of the primary operation of the facility.

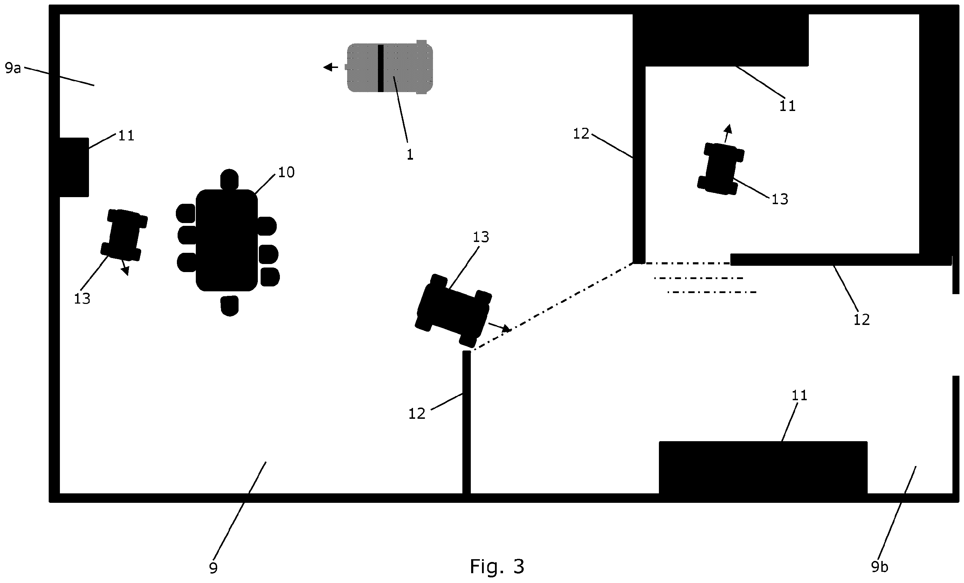

Fig. 3 is a schematic view of a facility 9, in the form of an office space, in which an autonomous cleaning vehicle 1 moves and performs relevant and scheduled cleaning operations. Furthermore, a number of obstacles, in the form of a table 10 with chairs, a number of shelf racks 11, and various walls 12, are present.

A number of flexible resources 13, three of which are shown, in the form of autonomous vehicles also move around within the facility 9. The autonomous vehicles 13 transport goods within the facility 9, and may be in the form of pallet jacks.

The facility 9 is divided into a first zone 9a and a second zone 9b, and access to the zones 9a, 9b for the autonomous cleaning vehicle 1 as well as for the flexible resources 13 is governed by a cleaning scheduling system and a facility resource scheduling system, respectively.

The cleaning scheduling system defines constraints for the operation of the autonomous cleaning vehicle 1. The constraints may, e.g., include navigational constraints which ensure that collisions between the autonomous cleaning vehicle 1 and various obstacles 10, 11, 12 are avoided, and/or which define when the autonomous cleaning vehicle 1 is allowed to access the first zone 9a and the second zone 9b, respectively, as well as when such access is required, e.g. in order to fulfil service contracts. Furthermore, the constraints may define which cleaning actions the autonomous cleaning vehicle 1 is supposed to perform in which parts of the facility 9, the frequency at which the various cleaning operations should be performed, the priority or urgency of the cleaning operations, e.g. whether a given cleaning operation is critical, etc. The cleaning scheduling system schedules cleaning operations to be performed by the autonomous cleaning vehicle 1, subject to the defined constraints, and instructs the autonomous cleaning vehicle 1 to perform cleaning operations in accordance with the schedule.

Similarly, the facility resource scheduling system defines constraints for the operation of the flexible resources 13. These constraints may, e.g., include navigational constraints for the flexible resources 13 similar to the navigational constraints of the autonomous cleaning vehicle 1 described above. Furthermore, the constraints related to the facility resource scheduling system may define operations and tasks which need to be handled by the flexible resources, the priority of each task, whether or not, and to which extent, a given task is critical or time sensitive, etc. The facility resource scheduling system schedules the operation of each of the flexible resources 13, subject to the defined constraints, and instructs the flexible resources 13 to operate in accordance with the schedule.

In order to avoid conflicts between the operation of the autonomous cleaning vehicle 1, handled by the cleaning scheduling system, and the operation of the flexible resources 13, handled by the facility resource scheduling system, the facility resource scheduling system and the cleaning scheduling system cooperate in scheduling operation of the flexible resources 13 and the autonomous cleaning vehicle 1, subject to the constraints defined by the respective scheduling systems. Thereby the operation of the autonomous cleaning vehicle 1 takes constraints related to the flexible resources 13 into account, and the operation of the flexible resources 13 takes constraints related to the autonomous cleaning vehicle 1 into accou nt.

This is done in a manner which co-optimizes the operation of the flexible resources 13 and the operation of the autonomous cleaning vehicle 1. Accordingly, it is ensured that tasks with high priority are performed, regardless of whether the tasks are performed by the flexible resources 13 or by the autonomous cleaning vehicle 1, and it is avoided that tasks related to one of the scheduling systems are systematically set aside in order to allow tasks of the other scheduling system to be performed. This could, e.g., include defining time slots where the flexible resources 13 or the autonomous cleaning vehicle 1 are allowed or denied access to one of the zones 9a, 9b of the facility 9.

For instance, the scheduling systems may mutually define constraints for each other. Alternatively or additionally, the tasks to be performed by the flexible resources 13 and by the autonomous cleaning vehicle 1 may each be provided with a cost weight by the relevant scheduling system. All of the tasks may then be ranked, based on their cost weights, thereby prioritizing tasks of the flexible resources 13 and tasks of the autonomous cleaning vehicle 1 relative to each other.

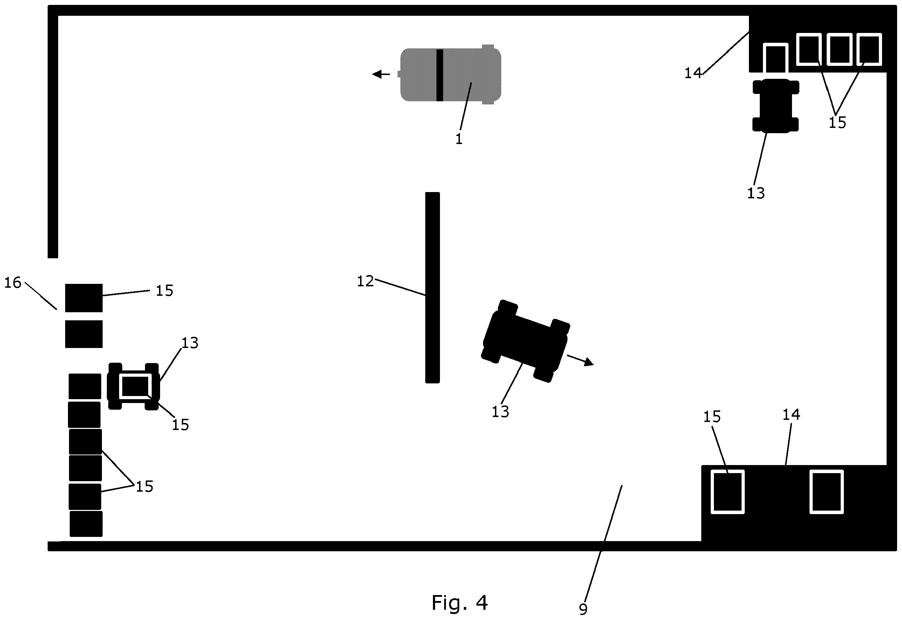

Fig. 4 is a schematic view of an alternative facility 9, in the form of a warehouse storage. Similarly to the facility 9 illustrated in Fig. 3, the facility 9 of Fig. 4 is also provided with an autonomous cleaning vehicle 1 and obstacles in the form of storage racks 14 and a wall 12. Flexible resources 13, three of which are shown, in the form of autonomous pallet jacks, operate within the facility 9.

The flexible resources 13 attend to the primary operation of the facility 9, which is transferring items 15 between the storage racks 14 and a gate opening 16 of the facility 9. This includes transferring items 15 received at the gate opening 16 to a specified storage position at a storage rack 14, as well as picking up an item 15 at a specified storage position at a storage rack 14 and delivering the item at the gate opening 16, ready for pick-up by an external transfer vehicle or a recipient. The flexible resources 13 may further transfer items 15 between relevant storage positions at the storage racks 14.

The autonomous cleaning vehicle 1 and the flexible resources 13 are operated in a co-optimized manner, essentially as described above with reference to Fig. 3.

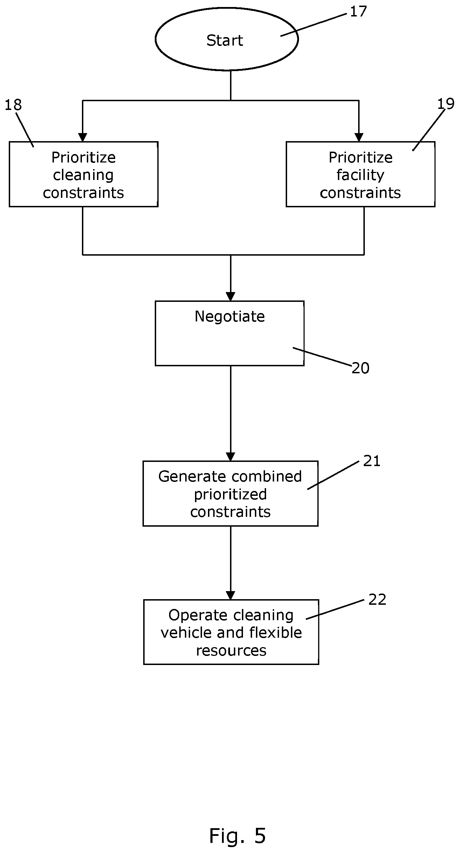

Fig. 5 is a flow chart illustrating a method according to an embodiment of the invention. The process is started at step 17. At step 18, constraints defined by a cleaning scheduling system are prioritized. This may include providing the constraints with cost weights and ranking the constraints according to their cost weights.

Similarly, at step 19, constraints defined by a facility resource scheduling system are prioritized, e.g. by providing the constraints with cost weights and ranking them in accordance therewith.

At step 20, the cleaning scheduling system and the facility resource scheduling system negotiate in order to co-optimize the operation of the autonomous cleaning vehicle and the operation of the flexible resources, while taking the respective prioritized constraints into account. As a result, a combined prioritized list of constraints, related to the operation of the autonomous cleaning vehicle and to the flexible resources, is generated at step 21.

Finally, at step 22, the autonomous cleaning vehicle and the flexible resources are operated, based on the combined prioritized constraints.

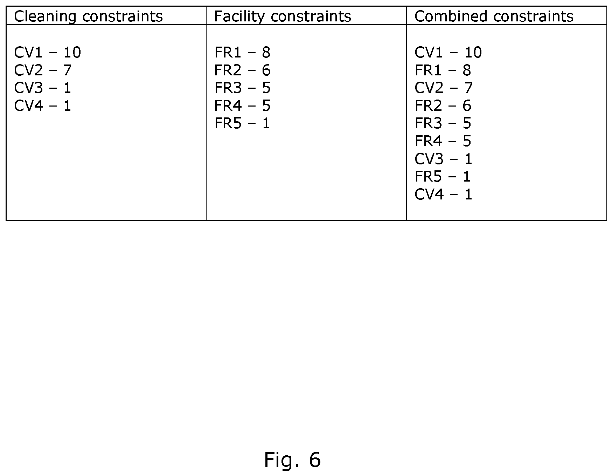

Fig. 6 illustrates prioritization of constraints as part of a method according to an embodiment of the invention. Constraints defined by a cleaning scheduling system, CV1-CV4, and constraints defined by a facility resource scheduling system, FR1-FR5, are each provided with a cost weight indicating the importance of the constraint. For instance, constraint CV1 is provided with a cost weight of 10, indicating that this is a very important constraint, whereas constraints CV3, CV4 and FR1 are all provided with a cost weight of 1, indicating that these constraints have low importance, and that they may therefore be set aside in order to meet other constraints if necessary.

The cleaning scheduling system and the facility resource scheduling system cooperate in generating the combined prioritized list of constraints shown in the right-most column of Fig. 6. It can be seen that the constraints are ranked in accordance with their assigned cost weights, regardless of which of the scheduling systems defined the constraint. Thereby it is ensured that a constraint with a high cost weight, defined by one scheduling system, is given priority over a constraint with a lower cost weight, defined by the other scheduling system.

## Claims

1. A method for planning cleaning operations for an autonomous cleaning vehicle (1) at a facility (9), the facility (9) comprising one or more flexible resources (13), the method comprising the steps of:
- providing a facility resource scheduling system, the facility resource scheduling system defining constraints for operation of the flexible resources (13) of the facility (9), and the facility resource scheduling system being configured to schedule operation of the flexible resources (13) subject to the defined constraints,
- providing a cleaning scheduling system, the cleaning scheduling system defining constraints for operation of the autonomous cleaning vehicle (1), and the cleaning scheduling system being configured to schedule operation of the autonomous cleaning vehicle (1) subject to the defined constraints, and
- the facility resource scheduling system and the cleaning scheduling system cooperating in scheduling operation of the flexible resources (13) and operation of the autonomous cleaning vehicle (1), at the facility (9), subject to the constraints for operation of the flexible resources (13) and to the constraints for operation of the autonomous cleaning vehicle (1), while co-optimizing operation of the flexible resources (13) and operation of the autonomous cleaning vehicle (1).

2. A method according to claim 1, wherein the step of the facility resource scheduling system and the cleaning scheduling system cooperating in scheduling operation of the flexible resources (13) and operation of the autonomous cleaning vehicle (1) comprises the step of the facility resource scheduling system defining constraints for the cleaning scheduling system and/or the cleaning scheduling system defining constraints for the facility resource scheduling system.

3. A method according to claim 1 or 2, wherein the step of the resource scheduling system and the cleaning scheduling system cooperating in scheduling operation of the flexible resources (13) and operation of the autonomous cleaning vehicle (1) comprises the steps of ranking the constraints for operation of the flexible resources (13) and/or the constraints for operation of the autonomous cleaning vehicle (1), and scheduling operation of the flexible resources (13) and operation of the autonomous cleaning vehicle (1) in accordance with the ranking.

4. A method according to claim 3, wherein the step of ranking the constraints for operation of the flexible resources (13) and/or the constraints for operation of the autonomous cleaning vehicle (1) comprises applying a cost weight to the constraints and ranking the constraints based on the applied cost weights.

5. A method according to any of the preceding claims, wherein at least one of the constraints for operation of the flexible resources (13) and/or the constraints for operation of the autonomous cleaning vehicle (1) is a hard constraint, and wherein the step of the resource scheduling system and the cleaning scheduling system cooperating in scheduling operation of the flexible resources (13) and operation of the autonomous cleaning vehicle (1) comprises meeting the hard constraint(s) without modification.

6. A method according to any of the preceding claims, wherein the step of the facility resource scheduling system and the cleaning scheduling system cooperating in scheduling operation of the flexible resources (13) and operation of the autonomous cleaning vehicle (1) includes a negotiation between the facility resource scheduling system and the cleaning scheduling system.

7. A method according to any of the preceding claims, wherein the flexible resources (13) include one or more autonomous facility vehicles.

8. A method according to any of the preceding claims, wherein the constraints for operation of the flexible resources (13) and/or the constraints for operation of the autonomous cleaning vehicle (1) are dynamically updated.

9. A method according to any of the preceding claims, further comprising the step of operating the flexible resources (13) and the autonomous cleaning vehicle (1) in accordance with the scheduled operation.
